# EUROPÄISCHE PATENTSCHRIFT

(11) **EP 0 947 565 B1**
(45) Veröffentlichungstag und Bekanntmachung des Hinweises auf die Patenterteilung: **11.08.2004**
(21) Anmeldenummer: 99106683.8
(22) Anmeldetag: 01.04.1999
(51) Int. Cl.: C09D 4/00, C09D 175/16, C08F 290/06, C08F 290/14, C08F 222/10

(54) **Strahlungshärtbare Zubereitungen**
Radiation curable compositions
Compositions durcissables par rayonnement

(30) Priorität: 02.04.1998 DE 19814872
(43) Veröffentlichungstag der Anmeldung: 06.10.1999
(73) Patentinhaber: BASF AKTIENGESELLSCHAFT, 67056 Ludwigshafen (DE)
(72) Erfinder: Schwalm, Reinhold, 67157 Wachenheim (DE); Königer, Rainer, 67061 Ludwigshafen (DE); Beck, Erich, 68526 Ladenburg (DE); Menzel, Klaus, 71696 Möglingen (DE); Paulus, Wolfgang, 55128 Mainz (DE); Enenkel, Peter, 67258 Hessheim (DE)
(74) Vertreter: Kinzebach, Werner, Dr.

(56) Entgegenhaltungen:
- EP-A- 0 324 480
- EP-A- 0 538 866
- WO-A-92/17337
- WO-A-97/25389
- US-A- 5 146 531
- US-A- 5 635 544
- PATENT ABSTRACTS OF JAPAN vol. 011, no. 246 (C-439), 11. August 1987 (1987-08-11) & JP 62 054711 A (KURARAY CO LTD), 10. März 1987 (1987-03-10)
- PATENT ABSTRACTS OF JAPAN vol. 017, no. 406 (C-1090), 29. Juli 1993 (1993-07-29) & JP 05 078507 A (NIPPON KAYAKU CO LTD), 30. März 1993 (1993-03-30)

## Beschreibung

Die vorliegende Erfindung betrifft strahlungshärtbare Zubereitungen, die wenigstens ein Präpolymer mit wenigstens zwei olefinischen Doppelbindungen pro Molekül und wenigstens einen difunktionellen Ester α,β-ethylenisch ungesättigter Carbonsäuren mit Diolen, die eine lineare Alkylenkette mit 7 bis 14 Kohlenstoffatomen aufweisen, enthalten.

Strahlungshärtbare Zusammensetzungen haben in der Technik eine breite Anwendung, insbesondere als hochwertige Beschichtungsmaterialien für Oberflächen erlangt. Unter strahlungshärtbaren Zusammensetzungen versteht man Zubereitungen, die ethylenisch ungesättigte Polymere oder Präpolymere enthalten, und die, gegebenenfalls nach einem physikalischen Trocknungsschritt, durch Einwirkung energiereicher Strahlung, beispielsweise durch Bestrahlung mit UV-Licht oder durch Bestrahlung mit energiereichen Elektronen (Elektronenstrahlung) ausgehärtet werden.

Besonders hochwertige Beschichtungen erhält man auf Basis mehrfunktioneller α,β-ethylenisch ungesättigter Polymere oder Präpolymere. Solche ethylenisch ungesättigte Präpolymere sind aus P. K. T. Oldring (Hrsg.), Chemistry and Technology of UV- and EB-Formulations for Coatings, Inks and Paints, Vol. II, SITA Technology, London 1991 bekannt, beispielsweise auf Basis von Epoxyacrylaten (S. 31-68), Urethanacrylaten (S. 73-123) und Melaminacrylaten (S. 208-214).

Derartigen Zusammensetzungen werden oftmals niedermolekulare, ethylenisch ungesättigte Verbindungen zur Viskositätserniedrigung zugesetzt. Letztere polymerisieren ebenso wie die ethylenisch ungesättigten Polymere und Präpolymere beim Härten aus und werden so in die Beschichtung eingebaut. Man bezeichnet sie daher als Reaktivverdünner. Die Eigenschaften der erhaltenen Beschichtungen werden somit sowohl durch das eingesetzte ethylenisch ungesättigte Polymer bzw. Präpolymer als auch durch den Reaktivverdünner bestimmt. Für optimale Beschichtungseigenschaften ist zudem eine Abstimmung der ethylenisch ungesättigten Polymere bzw. Präpolymere auf die Reaktivverdünner erforderlich.

Strahlungshärtbare Zubereitungen haben sich aufgrund ihrer vorteilhaften Verarbeitungseigenschaften zur Beschichtung von Holz, Papier und Kunststoffen im Innenanwendungsbereich etabliert. Die Außenanwendung ist dagegen mit ihren hohen Anforderungen an die Witterungsbeständigkeit solcher strahlungshärtbaren Zubereitungen noch immer mit Problemen verknüpft.

Aus dem Stand der Technik ist eine Vielzahl von strahlungshartbaren Zubereitungen bekannt, die als Monomere, Oligomere oder Reaktivverdünner multifunktionale Acrylate auf Basis von Di- oder Polyolen enthalten. So beschreibt die GB-B-1138 117 strahlungshärtbare Lacke auf Basis ungesättigter Polyesterharze mit Styrol und Methylmethacrylat als Reaktivverdünner. Die JP-62 110 779 und die JP-62 132 568 offenbaren ebenfalls strahlungshärtbare Lacke, basierend auf Urethanoligomeren und trifunktionellen Reaktionsverdünnern. Eine Reihe weiterer Patente beschreibt die Verwendung solcher strahlungshärtbarer Zubereitungen für optische Anwendungen, z. B. die US-A-5,250,391 für Hologramme, die EP-A-324 480 für Brechungsindex-Abbildung und die JP-62 047 842 für optische Disks. Die genannten Zubereitungen sind jedoch nicht für die Aussenanwendung vorgesehen oder enthalten hochmolekulare, strahlungshärtbare Präpolymere oder Harze.

Die Verwendung von 1,6-Hexandioldiacrylat als Reaktionsverdünner ist aus WO 92/17337 und DE 25 37 783 A bekannt. In Zubereitungen bewirkt es eine gute Glanzstabilität unter Witterungsbedingungen (N. Round et al., Radiation Curing Conference Proceedings (1986)), jedoch wird in Radiat. Curing (1984), 11 (3), 24-30, 32/3 beschrieben, dass die physikalischen Eigenschaften von Dioldiacrylaten auf Kohlenwasserstoffbasis im Vergleich zu Dioldiacrylaten auf Basis von Glykolethern, besonders im Hinblick auf Härte und Abrasionsverhalten, ungünstiger sind. Auch zeigen strahlungshärtbare Zubereitungen auf Basis aliphatischer Urethanacrylate und 1,6-Hexandioldiacrylat Unverträglichkeitserscheinungen z. B. bei Substraten aus Kunststoffen wie PMMA, Polycarbonat und Acrylnitrilstyrol-Polymeren, die sich durch Anlösen des Substrates und damit einhergehenden Verschlechterungen der Eigenschaften auswirken.

Die JP-62 054711 beschreibt eine Urethan-modifizierte Acrylatharzzusammensetzung, die ein Urethanacrylat enthält, das durch Umsetzung eines Polyesterpolyols mit einem organischen Diisocyanat und einem Hydroxylgruppen-enthaltenden (Meth)acrylat erhältlich ist.

Die US 5,635,544 beschreibt ein UV-härtbares Beschichtungsmittel, das ein Gemisch aus hydrolysiertem kolloidalem Siliciumdioxid und einem hydrolysierten, teilweise kondensierten, ethylenisch ungesättigten Alkoxysilan enthält.

Die JP-05 078507 beschreibt eine durch ultraviolette Strahlung härtbare Harzzusammensetzung, die 20 bis 70 Gew.-% eines Urethan(meth)acrylats, 5 bis 60 Gew.-% eines Polyalkylenglykolmonooder -diacrylats und 5 bis 30 Gew.-% eines Di(meth)acrylats enthält.

Die US 5,146,531 beschreibt ein strahlungshärtbares Beschichtungsmittel für optische Fasern, das 20 bis 80 Gew.-% eines Urethanoligomers mit Acrylatgruppen enthält.

Die EP-A-0 538 866 beschreibt ein schützendes Beschichtungsmaterial, das (Meth)acrylatderivate mit 1 bis 6 ethylenisch ungesättigten Doppelbindungen enthält.

Grundsätzlich stellt sich bei den strahlungshärtbaren Zusammensetzungen des Standes der Technik das Problem, dass durch Auswahl und Abstimmung der Komponenten (Präpolymer und Reaktivverdünner) einzelne Anwendungseigenschaften wie Beschichtungshärte, Flexibilität und Witterungsbeständigkeit verbessert werden können, dies jedoch immer zu Lasten anderer Anwendungseigenschaften geht. Der vorliegenden Erfindung liegt daher die Aufgabe zu Grunde, strahlungshärtbare Zusammensetzungen bereitzustellen, die ohne Zusatz von inerten organischen Lösungsmitteln gute Verarbeitungseigenschaften mit guten Eigenschaften der Beschichtung verbinden. Insbesondere soll die Zubereitung gute Reaktivität und hohe Substratverträglichkeit mit guter mechanischer Festigkeit und hoher Witterungs- und Chemikalienbeständigkeit aufweisen.

Diese Aufgabe konnte überraschenderweise gelöst werden durch eine strahlungshärtbare Zubereitung, die wenigstens ein Präpolymer, das pro Molekül wenigstens zwei olefinische Doppelbindungen aufweist und wenigstens einen difunktionellen Ester von α,β-ethylenisch ungesättigten Carbonsäuren mit Diolen, welche eine lineare Alkylenkette mit 7 bis 14 Kohlenstoffatomen aufweisen, enthält.

Die vorliegende Erfindung betrifft somit strahlungshärtbare Zubereitungen, die
i) 20 bis 90 Gew.-% wenigstens eines Präpolymers mit Urethan- und/oder Harnstoffgruppen, das durch Umsetzung tri- und polyfunktionaler Isocyanatverbindungen mit α,β-ethylenisch ungesättigten Verbindungen, die zusätzlich wenigstens eine gegenüber Isocyanaten reaktionsfähige Gruppe aufweisen, erhältlich ist und wobei das Präpolymer pro Molekül wenigstens zwei olefinische Doppelbindungen enthält (Komponente A),
ii) 10 bis 80 Gew.-% wenigstens eines Diesters von α,β-ethylenisch ungesättigten Carbonsäuren mit Diolen, welche eine lineare Alkylenkette mit 7 bis 14 Kohlenstoffatomen aufweisen (Komponente B) und
bis zu 20 Gew.-%, bezogen auf das Gesamtgewicht der Komponenten A und B, übliche Zusatzstoffe enthalten.

Die erfindungsgemäßen Zusammensetzungen enthalten bevorzugt 30 bis 80 Gew.-% und insbesondere 40 bis 70 Gew.-% der Komponente A, vorzugsweise 20 bis 60 Gew.-% und insbesondere 30 bis 50 Gew.-% der Komponente B und bis zu 20 Gew.-%, bezogen auf das Gesamtgewicht der Komponenten A und B, übliche Zusatzstoffe.

In der Regel ist die Komponente A aus einem oder mehreren Strukturelementen aufgebaut, die als Träger für die olefinische Doppelbindungen enthaltenden Struktureinheiten funktionieren. Geeignete Strukturelemente umfassen aliphatische Urethane auf Basis von Diisocyanaten und geeigneten Mono-, Di- und Polyolen, Di- und Trimere von Diisocyanaten.

Ein Präpolymer (Komponente A) mit wenigstens zwei ungesättigten Doppelbindungen erhält man durch Kombination der oben genannten Strukturelemente mit geeigneten α,β-ethylenisch ungesättigte Doppelbindungen tragenden Struktureinheiten. Zu derartigen Struktureinheiten zählen insbesondere Vinyl- oder Allylgruppen tragende Hydroxyalkane, Vinyl- oder Allylester von aliphatischen, funktionalisierten Carbonsäuren und Ester von α,β-ethylenisch ungesättigten Carbonsäuren mit Di- und Polyolen.

Geeignete Präpolymere (Komponenten A) sind demnach z. B. Urethanoligomere, vorzugsweise aliphatische Urethanoligomere mit wenigstens zwei olefinischen Doppelbindungen, die als aliphatische Strukturelemente sowohl Alkylengruppen, vorzugsweise mit 4 bis 10 C-Atomen, als auch Cycloalkylengruppen mit vorzugsweise 6 bis 20 C-Atomen umfassen, wobei sowohl die Alkylen- als auch die Cycloalkyleneinheiten mit C₁-C₄-Alkyl, insbesondere Methyl, ein- oder mehrfach substituiert sein können sowie ein oder mehrere nicht benachbarte Sauerstoffatome enthalten können.

Erhältlich sind solche erfindungsgemäß als Komponenten A eingesetzte Präpolymere mit Urethan- und/oder Harnstoffgruppen durch Umsetzung tri- und polyfunktionaler Isocyanatverbindungen mit α,β-ethylenisch ungesättigten Verbindungen, die zusätzlich wenigstens eine gegenüber Isocyanaten reaktionsfähige Gruppe wie z. B. OH-Gruppen oder NH-Gruppen aufweisen.

Geeignete trifunktionelle Isocyanatverbindungen A sind sowohl Verbindungen mit definierter Summenformel, die 3 NCO-Gruppen pro Molekül aufweisen, als auch niedermolekulare Oligomere mit einem zahlenmittleren Molekulargewicht Mₙ < 1000, die im Mittel etwa 3,0 Isocyanatgruppen pro Oligomer-Molekül enthalten. Besonders geeignete trifunktionale Isocyanatverbindungen sind die Isocyanurate und Biurete folgender Diisocyanate sowie die Addukte besagter Diisocyanate an trifunktionelle Alkohole, wie Glycerin, Trimethylolethan, Trimethylolpropan etc., oder Triamine. Üblicherweise sind die difunktionalen Isocyanatverbindungen ausgewählt unter aliphatischen, aromatischen und cycloaliphatischen Diisocyanaten. Sie weisen im allgemeinen 4 bis 22 C-Atome auf. Insbesondere handelt es sich um Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Trimethylhexandiisocyanat oder Tetramethylhexandiisocyanat, 1,4-, 1,3- oder 1,2-Diisocyanatocyclohexan, 4,4'-Di(isocyanatocyclohexyl)methan, 1-Isocyanato-"3,3, 5-trimethyl-5-(isocyanatomethyl)cyclohexan (Isophorondiisocyanat), 2,4- oder 2,6-Diisocyanato-1-methylcyclohexan, 2,4-Diisocyanatotoluol, 2,6-Diisocyanatotoluol, Tetramethylxylylendiisocyanat, 1,4-Diisocyanatobenzol, 4,4'- und 2,4-Diisocyanatodiphenylmethan, p-Xylylendiisocyanat sowie Isopropenyldimethyltoluylendiisocyanat. Bevorzugt sind jedoch die aliphatischen und cycloaliphatischen Diisocyanate. Durch Umsetzung von Diisocyanaten mit Polyolen oder Polyaminen sind analog auch polyfunktionale Isocyanatverbindungen zugänglich. Bevorzugte Isocyanatverbindungen sind die Isocyanurate und Biurete, insbesondere die Isocyanurate.

Beispiele für Polyisocyanate sind ferner Isocyanuratgruppen auf-5 weisende Polyisocyanate, Biuretgruppen aufweisende Polisocyanate, Urethan- und/oder Allophanatgruppen aufweisende Polyisocyanate, Oxadiazintriongruppen enthaltende Polyisocyanate, Uretonimin-modifizierte Polyisocyanate oder deren Gemische. Bei den Isocyanuratgruppen aufweisenden Polyisocyanaten handelt es sich insbesondere um einfache Tris-isocyanato-Isocyanurate, welche cyclische Trimere der Diisocyanate darstellen, oder um Gemische von ihren höheren, mehr als einen Isocyanuratring aufweisenden Homologen.

α,β-ethylenisch ungesättigte Struktureinheiten für die Umsetzung mit den tri- und polyfunktionalen Isocyanatverbindungen zur Bildung von α,β-ethylenisch ungesättigten Präpolymeren als Komponenten A sind in der Regel ausgewählt unter den Estern ethylenisch ungesättigter Carbonsäuren wie Acrylsäure, Methacrylsäure, Crotonsäure, Acrylamidoglykolsäure, Methacrylamidoglykolsäure und Vinylessigsäure, mit einem Di- oder Polyol mit vorzugsweise 2 bis 20 C-Atomen, wie Ethylenglykol, Diethylenglykol, Triethylenglykol, 1,2-Propylenglykol, 1,3-Propylenglykol, Diethylenglykol, Triethylenglykol, Dipropylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, Glycerin, Trimethylolethan, Trimethylolpropan, Trimethylolbutan, Pentaerythrit, Ditrimethylolpropan, Erythrit und Sorbit, sofern der Ester wenigstens eine, gegenüber Isocyanat reaktive OH-Gruppe aufweist. Weiterhin können auch die Amide der vorgenannten ethylenisch ungesättigten Carbonsäuren mit Aminoalkoholen z. B. 2-Aminoethanol, 3-Amino-1-propanol, 1-Amino-2-propanol oder 2-(2-Aminoethoxy)ethanol sowie die Vinyl-, Allyl- und Methallylether der vorgenannten Di- oder Polyole eingesetzt werden, sofern sie noch eine freie OH-Gruppe aufweisen. Bevorzugt sind die Ester der Acrylsäure und der Methacrylsäure wie 2-Hydroxyethyl(meth)acrylat, Hydroxypropyl- (meth)acrylat, 1,4-Butandiolmono(meth)acrylat, Neopentylglykolmono(meth)acrylat, Trimethylolpropanmono- und -di(meth)acrylat, Pentaerythritdi- und - tri(meth)acrylat. Besonders bevorzugt sind die Ester ausgewählt unter 2-Hydroxyethylacrylat, Hydroxypropylacrylat und 1,4-Butandiolmonoacrylat. Beispiele für Amide ethylenisch ungesättigter Carbonsäuren mit Aminoalkoholen sind 2-Hydroxyethylacrylamid und - methacrylamid, 2- und 3-Hydroxypropyl(meth)acrylamid und 5-Hydroxy-3-oxopentyl(meth)acrylamid. Besonders bevorzugt als Komponente A sind demzufolge Urethanacrylate und Urethanmethacrylate von Isocyanuraten bzw. Biureten, insbesondere Urethanacrylate aus Isocyanuraten oder Biureten und Hydroxyethylacrylat, Hydroxypropylacrylat und 1,4-Butandiolmonoacrylat. Ganz besonders bevorzugt als Komponenten A sind genannte Urethanacrylate und Urethanmethacrylate, wenn sie im Mittel zwei bis drei olefinische Doppelbindungen pro Molekül aufweisen.

In der Regel weisen die Komponenten A auf Basis von Urethan- oder Harnstoffderivaten keine freien Isocyanatgruppen auf. Dies wird üblicherweise dadurch erreicht, dass man die NCO-Gruppen der Isocyanatverbindungen mit einer wenigsten äquimolaren Menge an OHund/oder NH-Gruppen umsetzt, wobei wenigstens 0,3 Mol OH- und/ oder NH-Gruppen pro Mol Isocyanatgruppen von den α,β-ethylenisch ungesättigten Struktureinheiten beigesteuert werden. Üblicherweise liegt der Anteil an OH- und/oder NH-Gruppen der α,β-ethylenisch ungesättigten Struktureinheiten an der Gesamtzahl der umgesetzten OH- und/oder NH-Gruppen im Bereich von 30 % bis 100 %, insbesondere bei 50 % bis 90 % und ganz besonders bevorzugt im Bereich von 60 % bis 80 %. Demzufolge werden 0 bis 70 %, vorzugsweise 10 bis 50 % und besonders bevorzugt 20 bis 40 % der Gesamtzahl der mit Isocyanatgruppen umgesetzten OH- und/oder NH-Gruppen von gesättigten Amin- oder Alkoholkomponenten beigesteuert. Geeignete gesättigte Alkoholkomponenten sind z. B. lineare Mono-, Diund Polyole mit 1 bis 14 C-Atomen, verzweigte Mono-, Di- und Polyole mit 3 bis 20 Kohlenstoffatomen und cyclische Mono-, Di- und Polyole mit 3 bis 14 Kohlenstoffatomen, bevorzugt sind Methanol, Ethanol, n-Propanol, Isopropanol, n-Butanol, Isobutanol und tert.-Butanol. Beispiele für geeignete Amine umfassen primäre Monoamine, z. B. C₁-C₂₀-Alkylamine wie n-Butylamin, n-Hexylamin, 2-Ethylhexyl-1-amin, 1-Octadecylamin, Amine mit cycloaliphatischen, heterocyclischen oder (hetero)aromatischen Strukturelementen wie Benzylamin, 1-(3-Aminopropyl)imidazol und Tetrahydrofurfurylamin. Ferner sind Verbindungen mit zwei primären Aminogruppen zu nennen, z. B. C₁-C₂₀-Alkylendiamine wie Ethylendiamin, Butylendiamin, 1,5-Diamino-3-oxopentan etc. Bevorzugt sind sekundäre Amine, z. B. Di-C₁-C₂₀-alkylamine, wie Di-ethylamin, Di-npropylamin, Di-n-butylamin, Diethanolamin, Dicyclohexylamin, Bis-2-ethylhexylamin, Diallylamin und N-Ethylethanolamin. Ebenfalls bevorzugt sind heterocyclische sekundäre Amine, in denen die NH-Gruppe im Heterocyclus sitzt, wie Pyrrolidin, Piperidin, Piperazin, N-Methylpiperazin, Morpholin und 2,2,6,6-Tetramethylpiperidin.

Die Komponente B der strahlungshärtbaren Zubereitung ist wenigstens ein difunktioneller Ester von α,β-ethylenisch ungesättigten Carbonsäuren mit Diolen, welche eine lineare Alkylenkette mit 7 bis 14 Kohlenstoffatomen aufweisen. Im Allgemeinen werden solche niedermolekularen difunktionellen olefinisch ungesättigten Ester als Reaktivverdünner bezeichnet. Ihre niedrige Viskosität ermöglicht lösungsmittelarme, insbesondere lösungsmittelfreie Zubereitungen auf Basis von Präpolymeren, die dennoch gute Anwendungseigenschaften zeigen. Bei der strahlungsinduzierten Härtung werden die Reaktivverdünner in die Beschichtung eingebaut und wirken aufgrund ihrer Difunktionalität zusätzlich vernetzend.

Die Reaktivverdünner (Komponenten B) entsprechen der Formel I: 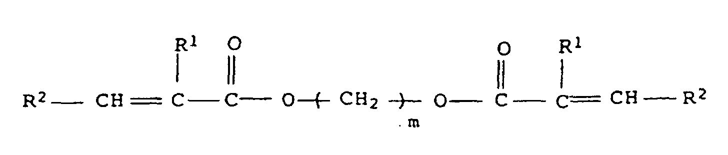 worin die Reste R¹ unabhängig voneinander für H, CH₃ oder CH₂-COOX stehen;
die Reste R² unabhängig voneinander für H, CH₃ oder COOX stehen;
X für C₁- bis C₁₂-Alkyl steht, und
m für eine ganze Zahl im Bereich von 7 bis 14 steht.

Demzufolge können die α,β-ethylenisch ungesättigten Carbonsäuren der Komponente B unabhängig voneinander ausgewählt sein unter Monocarbonsäuren, wie Acrylsäure, Methacrylsäure und Crotonsäure, und unter Dicarbonsäuren, wie Maleinsäure und Fumarsäure. Ebenfalls geeignet sind auch Vinylessigsäure, Mesaconsäure und Citraconsäure, besonders bevorzugt sind jedoch die Acrylsäure und die Methacrylsäure. Der Formel I entsprechend sind die den Ester bildenden Diole vorzugsweise ausgewählt unter linearen α,ω-Diolen mit Alkylengruppen, die 7 bis 14 Kohlenstoffatome enthalten, wie 1,7-Heptandiol, 1,8-Octandiol, 1,9-Nonandiol, 1,10-Decandiol, 1,11-Undecandiol, 1,12-Dodecandiol, 1,13-Tridecandiol und 1,14-Tetradecandiol. Bevorzugt sind 1,8-Octandiol, 1,9-Nonandiol, 1,10-Decandiol und 1,12-Dodecandiol, besonders bevorzugt ist 1,10-Decandiol. Besonders bevorzugte Komponenten B sind demzufolge 1,8-Octandioldiacrylat, 1,9-Nonandioldiacrylat, 1,10-Decandioldiacrylat und 1,12-Dodecandioldiacrylat sowie 1,8-Octandioldimethacrylat, 1,9-Nonandioldimethacrylat, 1,10-Decandioldimethacrylat und 1,12-Dodecandjoldimethacrylat.

Die erfindungsgemäßen strahlungshärtbaren Zubereitungen können in Form flüssiger bzw. fließfähiger Formulierungen der Komponenten A und B, z. B. als Lösungen oder Dispersionen und, sofern die Komponenten flüssig sind, auch in Reinform vorliegen.

Ferner können sie auch als pulverförmige Zubereitungen vorliegen, wie sie beispielsweise zur Pulverbeschichtung metallischer Oberflächen verwendet werden. In Frage kommen auch sogenannte "hotmelt"-Formulierungen, die erst bei erhöhter Temperatur fließfähig werden. Je nach Art der Formulierung enthalten die strahlungshärtbaren Zubereitungen übliche Hilfsmittel, wie Verdicker, Verlaufshilfsmittel, Entschäumer, UV-Stabilisatoren, Emulgatoren und/oder Schutzkolloide und Füllstoffe. Geeignete Hilfsmittel sind dem Fachmann aus der Lack-Beschichtungs-Technologie bekannt. Geeignete Füllstoffe, insbesondere für wässrige Dispersionen der Komponenten A und B sind unter anderem Silikate, die durch Hydrolyse von Siliciumtetrachlorid erhältlich sind (Aerosil® der Fa. Degussa), Kieselerde, Talkum, Aluminiumsilikate, Magnesiumsilikate, Calciumcarbonate etc. Geeignete Stabilisatoren umfassen typische UV-Absorber, wie Oxanilide, Triazine, Benzotriazole (erhältlich als Tinuvin®-Marken der Ciba Geigy) und Benzophenone. Diese können in Kombination mit üblichen Radikalfängern, beispielsweise sterisch gehinderten Aminen, z. B. 2,2,6,6-Tetramethylpiperidin und 2,6-Di-tert.-butylpiperidin (HALS-Verbindungen) eingesetzt werden. Stabilisatoren werden üblicherweise in Mengen von 0,1 bis 5,0 und vorzugsweise 0,5 bis 2,5 Gew.-%, bezogen auf die in der Zubereitung enthaltenen, polymerisierbaren Komponenten, eingesetzt.

Sofern die Aushärtung mittels UV-Strahlung erfolgt, enthalten die erfindungsgemäß zur Anwendung kommenden Zubereitungen wenigstens einen Photoinitiator. Hierbei ist zwischen Photoinitiatoren für radikalische Härtungsmechanismen (Polymerisation ethylenisch ungesättigter Doppelbindungen) und Photoinitiatoren für kationische Härtungsmechanismen (kationische Polymerisation ethylenisch ungesättigter Doppelbindungen oder Polymerisation Epoxygruppen enthaltender Verbindungen) zu unterscheiden. Bei der Härtung mittels Strahlung energiereicher Elektronen (Elektronenstrahlhärtung) kann auf den Einsatz von Photoinitiatoren verzichtet werden. Bei Anwendung der Elektronenstrahlhärtung können die erfindungsgemäßen Zubereitungen auch farbige Pigmente enthalten.

Geeignete Photoinitiatoren für kationische Photopolymerisationen, also die Polymeristion von Vinylverbindungen oder epoxygruppenhaltigen Verbindungen, sind z. B. Aryldiazoniumsalze, wie 4-Methoxybenzoldiazoniumhexafluorophosphat, Benzoldiazoniumtetrafluoroborat und Toluoldiazoniumtetrafluoroarsenat, Aryliodoniumsalze, wie Diphenyliodoniumhexafluoroarsenat, Arylsulfoniumsalze, wie Triphenylsulfoniumhexafluorosphosphat, Benzol- und Toluolsulfoniumhexafluorophosphat und Bis-[4-diphenylsulfoniophenyl]sulfidbishexafluorophosphat, Disulfone, wie Diphenyldisulfon und Phenyl-4-tolyldisulfon, Diazodisulfone, Imidotriflate, Benzointosylate, Isochinoliniumsalze, wie N-Ethoxyisochinoliniumhexafluorophosphat, Phenylpyridiniumsalze, wie N-Ethoxy-4-phenylpyridiniumhexafluorophosphat, Picoliniumsalze, wie N-Ethoxy-2-picoliniumhexafluorophosphat, Ferroceniumsalze, Titanocene und Titanoceniumsalze.

Die Photoinitiatoren werden in Mengen von 0,05 bis 20 Gew.-%, vorzugsweise 0,1 bis 10 Gew.-% und insbesondere 0,1 bis 5 Gew.-%, bezogen auf die polymerisierbaren Komponenten der erfindungsgemäßen Zubereitungen eingesetzt.

Die erfindungsgemäßen Zubereitungen erweisen sich besonders geeignet zum Beschichten von Substraten wie Holz, Papier, Kunststoffoberflächen, mineralischen Baustoffen wie Zement-Formsteine und Faserzementplatten, und insbesondere von Metallen oder beschichteten Metallen.

Demnach betrifft die vorliegende Erfindung auch ein Verfahren zum Beschichten von Substraten, insbesondere von Metallen oder beschichteten Metallen, sowie die durch dieses Verfahren erhältlichen beschichteten Substrate. Die Beschichtung der Substrate er-5 folgt in der Regel dadurch, dass man wenigstens eine erfindungsgemäße, strahlungshärtbare Zubereitung auf das zu beschichtende Substrat in der gewünschten Stärke aufbringt, gegebenenfalls vorhandenes Lösungsmittel entfernt und anschließend durch Einwirkung energiereicher Strahlung wie UV-Strahlung oder Elektronenstrahlung aushärtet. Dieser Vorgang kann, sofern gewünscht, ein- oder mehrfach wiederholt werden. Das Aufbringen der strahlungshärtbaren Zubereitungen auf das Substrat erfolgt in bekannter Weise, z. B. durch Spritzen, Spachteln, Rakeln, Bürsten, Rollen oder Gießen. Die Beschichtungsstärke liegt in der Regel im Bereich von 3 bis 500 g/m² und vorzugsweise 10 bis 200 g/m² entsprechend Nassfilmdicken von etwa 3 bis 500 µm, vorzugsweise 10 bis 200 µm. Das Aufbringen kann sowohl bei Raumtemperatur als auch bei erhöhter Temperatur, vorzugsweise jedoch nicht oberhalb 100 °C erfolgen. Anschließend werden die Beschichtungen durch Einwirkung der energiereichen Strahlung, vorzugsweise UV-Strahlung der Wellenlänge 250 bis 400 nm cder durch Bestrahlung mit energiereichen Elektronen (Elektronenstrahlung; 150 bis 300 kev) gehärtet. Als UV-Quellen dienen beispielsweise Hochdruckquecksilberdampflampen, z. B. CK- oder CK1-Strahler der Fa. IST. Die üblicherweise zur Vernetzung ausreichende Strahlungsdosis bei UV-Härtung liegt im Bereich von 80 bis 3000 mJ/cm².

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsqüelle vorbeiführt. Hierfür ist es erforderlich, dass die Aushärtungsgeschwindigkeit der erfindungsgemäßen Zubereitung ausreichend hoch ist.

Die erfindungsgemäßen Zubereitungen lassen sich aufgrund ihrer hohen Reaktivität leicht verarbeiten. Sie sind besonders geeignet zum Beschichten der oben erwähnten Substrate und ergeben Beschichtungen mit hoher mechanischer Festigkeit und hoher Witterungs- und Chemikalienbeständigkeit.

Demnach betrifft die vorliegende Erfindung auch die Verwendung der erfindungsgemäßen, strahlungshärtbaren Zubereitungen zum Beschichten von Substraten, insbesondere die Verwendung als Topcoat oder zur Herstellung von Topcoats für Automobilmehrschichtlackierungen.

Die im folgenden angegebenen Beispiele sollen die vorliegende Erfindung erläutern, ohne sie jedoch einzuschränken.

### Beispiele

### I. Herstellung der strahlungshärtbaren Zubereitungen

### 1.) Herstellung der erfindungsgemäßen Zubereitungen B1, B2 und B3

Zu je 70 Teilen eines Urethanacrylats, hergestellt durch Umsetzung von 75 % der Isocyanatgruppen des Isocyanurats von Hexamethylendiisocyanat mit Hydroxyethylacrylat und 25 % der NCO-Gruppen mit Methanol werden jeweils 4 Gew.-% des Photoinitiators Darocure 1173 (Ciba-Geigy) und jeweils 30 Teile der erfindungsgemäßen Reaktivverdünner zugesetzt. So erhält man mit 1,10-Decandioldiacrylat das Beispiel B1, mit 1,8-Octandioldiacrylat das Beispiel B2 und mit 1,9-Nonandioldiacrylat Beispiel B3.

### 2.) Herstellung der erfindungesgemäßen Zubereitung B4

Zu 50 Teilen eines Urethanacrylats, hergestellt durch Umsetzung von 75 % der Isocyanatgruppen des Isocyanurats von Hexamethylendiisocyanat mit Hydroxyethylacrylat und 25 % der Isocyanatgruppen mit Methanol, werden 50 Teile 1,10-Decandioldiacrylat und 4 Gew.-% des Photoinitiators Darocure 1173 (Ciba-Geigy) zugesetzt.

### 3.) Herstellung des Vergleichsbeispiels VB1

Die Herstellung erfolgt wie unter 1.) beschrieben, jedoch wird als Reaktivverdünner 1,6-Hexandioldiacrylat eingesetzt.

### 4.) Herstellung des Vergleichsbeispiels VB2

Die Herstellung erfolgt analog zu 2.), jedoch wird als Reaktivverdünner 1,6-Hexandioldiacrylat eingesetzt.

Die unter 1.) bis 4.) beschriebenen strahlungshärtbaren Zubereitungen sind bei Raumtemperatur fließfähig und weisen Viskositäten < 10 Pas auf.

### 5.) Herstellung von Vergleichsueispiel VB3

wie Herstellung der Zubereitung erfolgt analog 1.), jedoch wird als Reaktivverdünner 4-tert.-Butylcyclohexylacrylat eingesetzt. Die so hergestellte Zubereitung VB3 ist aufgrund der Unverträglichkeit der Komponenten trüb und damit als strahlungshärtbare Zubereitung, insbesondere als Klarlack, ungeeignet.

### II. Bestimmung der Reaktivität und der mechanischen Eigenschaften von gehärteten Beschichtungen der Zubereitungen B1, B2, B3 und VB1

### 1.) Bestimmung der Reaktivität

Die Reaktivität wird in m/min angegeben und entspricht der Geschwindigkeit, mit der ein mit einer strahlungshärtbaren Zubereitung in einer Nassfilmstärke von 100µm behandelte Substrat an einer UV-Quelle mit einer Leistung von 120 w/cm in einem Abstand von 10 cm vorbeigeführt werden kann, so dass noch vollständige Aushärtung stattfindet. Geprüft wird die vollständige Aushärtung mit dem Fingernageltest. Angegeben wird die schnellste Geschwindigkeit, bei der keine Eindrücke beim Fingernagelritzen zurückbleiben. Die Ergebnisse sind in Tabelle 1 zusammengefasst.

### 2.) Bestimmung der Beschichtungshärte

Die Charakterisierung der Beschichtungshärte erfolgte durch Bestimmung der Pendeldämpfung analog DIN 53157. Hierzu wurden die strahlungshärtbaren Zusammensetzungen der Beispiele und der Vergleichsbeispiele mit einer Nassfilmdicke von 100 µm auf Glas aufgebracht. Die so erhaltene Probe zur Aushärtung mit einer Bandgeschwindigkeit von 10 m/min in einem Abstand von 10 cm an einen Quecksilberdampf-Hochdruckstrahler (120 W/cm) zweimal vorbeigeführt. Anschließend wurde die Pendeldämpfung mit einem Pendelgerät nach DIN 53157 (König) bestimmt. Die Angabe erfolgt in Sekunden. Die Ergebnisse sind in Tabelle 1 zusammengefaßt.

### 3.) Bestimmung der Flexibilität

Die Bestimmung der Flexibilität der Beschichtung erfolgte durch Ermittlung der Erichsen-Tiefung analog DIN 53156. Hierzu wurde mittels eines Spiralrakels die jeweilige Zubereitung in einer Nassfilmdicke von 50 µm auf BONDER-Blech 132 aufgebracht. Zur Aushärtung wurde in der oben beschriebenen Weise mit einem Quecksilberdampf-Hochdruckstrahler (120 W/cm) belichtet. Anschließend wurde die Erichsen-Tiefung durch Eindrücken einer Metallkugel in die nicht beschichtete Seite des Blechs (DIN 53156) bestimmt. Die Ergebnisse sind in Tabelle 1 zusammengefaßt.

**Tabelle 1**

| Beispiel | Reaktivität [m/min] | Pendeldämpfung [sec] | Erichsen-Tiefung [mm] |
|---|---|---|---|
| B1 | 15 | 145 | 3,4 |
| B2 | 15 | 154 | 2,4 |
| B3 | 15 | 153 | 2,0 |
| VB1 | 15 | 149 | 1,5 |

### III. Verträglichkeitsprüfung der strahlungshärtbaren Zubereitungen B1 und VB1 auf Kunststoffoberflächen

Ein wichtiges Anwendungsgebiet von strahlungshärtbaren Zubereitungen ist der Schutz von Kunststoffoberflächen gegen Bewitterung. Dabei ist es vorteilhaft, wenn die Kunststoffoberfläche durch die Zubereitungen möglichst wenig angegriffen wird. Zur Beurteilung der Verträglichkeit werden die Zubereitungen B1 und VB1 auf Kunstoffoberflächen aus Polymethylmethacrylat (PMMA) bzw. Acrylnitril-Polystyrol-Acrylester-Copolymerisat (Luran S) getropft und die Veränderung (Oberflächenschädigung) der Oberflächen in Abhängigkeit von der Zeit beurteilt (siehe Tabelle 2).

**Tabelle 2**

| Oberfläche | Einwirkzeit | Beurteilung der Oberflächenschädigung | |
|---|---|---|---|
| | | B1 | VB1 |
| PMMA | 1h | keine | leicht angequollen |
| | 2h | keine | Ringrandbildung |
| | 3h | keine | angequollen |
| Luran S | 1h | leicht angelöst | stark angelöst |
| | 2h | leicht angelöst | stark angelöst |
| | 3h | leicht angelöst | völlig zerfressen |

### IV. Bestimmung der Chemikalienbeständigkeit der gehärteten Beschichtungen der Zubereitungen B1 und VB1 bzw. B4 und VB2

Zur Beurteilung der Chemikalienbeständigkeit werden mit den Zubereitungen B1, VB1, B4 und VB2 wie unten beschrieben Beschichtungen hergestellt, anschließend verschiedene Chemikalien auf die Oberflächen der Beschichtungen aufgebracht und die Chemikalien jeweils 24 Stunden bei unterschiedlichen Temperaturen einwirken gelassen. Angegeben wird die obere Grenztemperatur, ab der eine Schädigung der Beschichtungsoberfläche beobachtet wird.

**Tabelle 3**

| Chemikalie | B4¹) [°C] | VB2¹) [°C°] |
|---|---|---|
| Schweflige Säure (6%ig) | 70 | 66 |
| Pankreatin + H₂O | 77 | 77 |
| Natronlauge (5%ig) | 77 | 49 |
| Schwefelsäure (10%ig) | 63 | 56 |
| Wasser | 77 | 77 |

| | | |
|---|---|---|
| 1) Die Zubereitungen B4 bzw. VB2 wurden mit 100 µm Nassfilmdicke auf einen Träger aufgebracht, bei einer Geschwindigkeit von 10 m/min mit einem Quecksilberhochdruckstrahler (120 w/cm) belichtet, danach auf 100 °C erwärmt und erneut mit einer Geschwindigkeit von 10 m/min belichtet. | | |

## Patentansprüche

1. Strahlungshärtbare Zubereitung, enthaltend
i) 20 bis 90 Gew.-% wenigstens eines Präpolymers mit Urethan- und/oder Harnstoffgruppen, das durch Umsetzung triund polyfunktionaler Isocyanatverbindungen mit α,β-ethylenisch ungesättigten Verbindungen, die zusätzlich wenigstens eine gegenüber Isocyanaten reaktionsfähige Gruppe aufweisen, erhältlich ist und wobei das Präpolymer pro Molekül wenigstens zwei olefinische Doppelbindungen enthält (Komponente A),
ii)10 bis 80 Gew.-% wenigstens eines Diesters von α,β-ethylenisch ungesättigten Carbonsäuren mit Diolen, welche eine lineare Alkylenkette mit 7 bis 14 Kohlenstoffatomen aufweisen (Komponente B) und
bis zu 20 Gew.-%, bezogen auf das Gesamtgewicht der Komponenten A und B, übliche Zusatzstoffe.

2. Zubereitung nach Anspruch 1, wobei die Komponente A ein Addukt eines Hydroxyalkyl(meth)acrylats an ein trifunktionelles Isocyanat ist.

3. Zubereitung nach Anspruch 2, wobei das trifunktionelle Isocyanat ausgewählt ist unter Isocyanuraten und Biureten von difunktionellen Isocyanaten.

4. Zubereitung nach einem der vorhergehenden Ansprüche, wobei die Komponente B ein Ester der Formel I 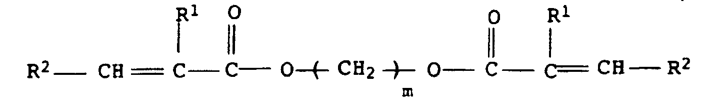 ist, worin die Reste R¹ unabhängig für H, CH₃ oder CH₂-COOX stehen;
die Reste R² unabhängig voneinander für H, CH₃ oder COOX stehen;
X für C₁- bis C₁₂-Alkyl steht, und
m für eine ganze Zahl im Bereich von 7 bis 14 steht.

5. Verwendung der strahlungshärtbaren Zubereitung nach einem der Ansprüche 1 bis 4 zum Beschichten von Substraten, insbesondere von Metallen oder beschichteten Metallen.

6. Verwendung der strahlungshärtbaren Zubereitung nach einem der Ansprüche 1 bis 4 als Topcoat oder zur Herstellung von Topcoats für Automobilmehrschichtlackierungen.

7. Verfahren zum Beschichten von Substraten, **dadurch gekennzeichnet, dass** man eine strahlungshärtbare Zubereitung nach einem der Ansprüche 1 bis 4 auf das zu beschichtende Substrat aufbringt und anschließend durch Bestrahlung mit UV oder Elektronenstrahlung härtet.

8. Beschichtetes Substrat, erhältlich durch ein Verfahren nach Anspruch 7.

## Claims

1. A radiation-curable formulation comprising
i) 20 to 90% by weight of at least one prepolymer with urethane and/or urea groups that is obtainable by reacting di-, tri- and polyfunctional isocyanate compounds with α,β-ethylenically unsaturated compounds which in addition have at least one isocyanate-reactive group, and where the prepolymer comprises at least two olefinic double bonds per molecule (component A), and
ii) 10 to 80% by weight of at least one diester of α,β-ethylenically unsaturated carboxylic acids with diols having a linear alkylene chain which has 7 to 14 carbon atoms (component B), and
up to 20% by weight, based on the overall weight of components A and B, of customary additives.

2. A formulation as claimed in claim 1, where component A is an adduct of a hydroxyalkyl (meth)acrylate with a trifunctional isocyanate.

3. A formulation as claimed in claim 2, where the trifunctional isocyanate is selected from isocyanurates and biurets of difunctional isocyanates.

4. A formulation as claimed in any one of the preceding claims, where component B is an ester of the formula I 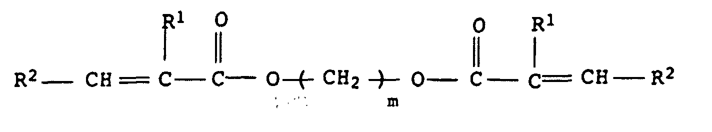 where R¹ independently at each occurrence is H, CH₃ or CH₂-COOX,
R² independently at each occurrence is H, CH₃ or COOX,
X is C₁-C₁₂-alkyl, and
m is an integer from 7 to 14.

5. The use of a radiation-curable formulation as claimed in any one of claims 1 to 4 for coating substrates, especially coated or uncoated metals.

6. The use of a radiation-curable formulation as claimed in any one of claims 1 to 4 as a topcoat, or for preparing topcoats, for multicoat automotive finishing systems.

7. A process for coating a substrate, which comprises applying a radiation-curable formulation as claimed in any one of claims 1 to 4 to the substrate that is to be coated and then curing it by radiation with UV or electron beams.

8. A coated substrate obtainable by a process as claimed in claim 7.

## Revendications

1. Composition durcissable par rayonnement, contenant
i) de 20 à 90% en poids d'au moins un prépolymère comportant des groupes uréthanne et/ou urée, que l'on peut obtenir par réaction de composés isocyanates tri- et polyfonctionnels avec des composés α,β-éthyléniquement insaturés, qui présentent en outre au moins un groupe réactif vis-à-vis d'isocyanates, et où le prépolymère contient, par molécule, au moins deux doubles liaisons oléfiniques (composant A),
ii) de 10 à 80% en poids d'au moins un diester d'acide carboxylique α,β-éthyléniquement insaturé avec des diols, qui présentent une chaîne alkylène linéaire comportant de 7 à 14 atomes de carbone (composant B) et
jusqu'à 20% en poids, par rapport au poids total des composants A et B, d'additifs usuels.

2. Composition selon la revendication 1, dans laquelle le composant A est un produit d'addition d'un (méth)acrylate d'hydroxyalkyle sur un isocyanate trifonctionnel.

3. Composition selon la revendication 2, dans laquelle l'isocyanate trifonctionnel est choisi parmi des isocyanurates et des biurets d'isocyanates difonctionnels.

4. Composition selon l'une quelconque des revendications qui précèdent, dans laquelle le composant B est un ester de la formule I 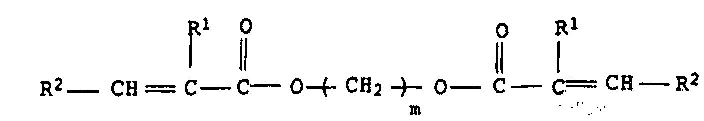 dans laquelle les restes R¹ représentent indépendamment l'un de l'autre H, CH₃ ou CH₂-COOX,
les restes R² représentent indépendamment l'un de l'autre H, CH₃ ou COOX,
X représente un radical alkyle en C₁ à C₁₂, et m est un nombre entier de l'ordre de 7 à 14.

5. Utilisation de la composition durcissable par rayonnement selon l'une quelconque des revendications 1 à 4 pour le revêtement de substrats, en particulier de métaux ou de métaux enduits.

6. Utilisation de la composition durcissable par rayonnement selon l'une quelconque des revendications 1 à 4 comme couche de finition ou pour la préparation de couches de finition pour peintures automobiles multicouches.

7. Procédé de revêtement de substrats, **caractérisé en ce que** l'on applique sur le substrat à revêtir une composition durcissable par rayonnement selon l'une quelconque des revendications 1 à 4, et l'on durcit ensuite par irradiation au moyen d'UV ou d'un faisceau électronique.

8. Substrat revêtu que l'on peut obtenir par un procédé selon la revendication 7.
